# EUROPEAN PATENT SPECIFICATION

(11) **EP 1 072 143 B1**
(45) Date of publication and mention of the grant of the patent: **23.06.2004**
(21) Application number: 99919839.3
(22) Date of filing: 13.04.1999
(51) Int. Cl.: H04L 29/06, G06G 1/00

(54) **SYSTEM FOR KEYING PROTECTED ELECTRONIC DATA TO PARTICULAR MEDIA TO PREVENT UNAUTHORIZED COPYING**
SYSTEM UM GESCHÜTZTE, VERSCHLÜSSELTE ELEKTRONISCHE DATEN ZU EINEM SPEZIELLEN SPEICHERMEDIUM ZU SENDEN UND UM UNBERECHTIGTES KOPIEREN ZU VERHINDERN
SYSTEME DE CLE DE DONNEES ELECTRONIQUES PROTEGEES SUR UN SUPPORT PARTICULIER DE MANIERE A EMPECHER UNE REPRODUCTION ILLICITE

(30) Priority: 17.04.1998 US 61493
(43) Date of publication of application: 31.01.2001
(73) Proprietor: IOMEGA CORPORATION, Roy, Utah 84067 (US)
(72) Inventor: KUPKA, Michael, S., Nacogdoches, TX 75961 (US); HAWKINS, Michael, L., Nacogdoches, TX 75961 (US); THOMAS, Trent, M., Ogden, UT 84403 (US)
(74) Representative: Cabinet Hirsch
(86) International application number: PCT/US1999/008196
(87) International publication number: WO 1999/055055

(56) References cited:
- EP-A- 0 665 486
- WO-A-96/35158
- WO-A-97/14087
- WO-A-97/29416
- WO-A-98/02793
- WO-A-98/43398
- US-A- 5 553 143
- PATENT ABSTRACTS OF JAPAN vol. 099, no. 003, 31 March 1999 (1999-03-31) & JP 10 333769 A (MITSUBISHI ELECTRIC CORP), 18 December 1998 (1998-12-18)

## Description

### FIELD OF THE INVENTION

The present invention relates to the prevention of unauthorized copying by associating electronic data to a particular piece of storage media. In particular, the present invention relates to a remote data delivery system wherein electronic data to be protected is delivered in a secure manner to a local machine which stores and permanently associates the protected electronic data to a particular piece of storage media based on a unique key of the media.

### BACKGROUND OF THE INVENTION

Protection of copyrighted and other protected digitally stored data has always been a primary concern of the owners of such material. In particular, piracy of computer software, music and video has been and continues to be of great concern because it is all but impossible to stop. Although there have been many prior attempts by the software, music, and video industries to curtail piracy, each has been met with limited success.

As part of the effort to combat piracy, software vendors have licensed software rather than transferring ownership when purchased. When software is purchased, the purchaser becomes a licensed user (i.e., licensee) rather than an owner. Copying of software under most license agreements is generally limited to one copy for backup purposes only in order to legally restrict unlimited copying. In addition, the software license typically grants a right to use the software on a single computer or for use by only one user at any time.

Software vendors have also attempted to combat software piracy by copy-protecting their software. While this attempt was effective to some extent, it failed because users were unable to make backup copies. Also, soon after the first copy-protected computer software was on the market, other programs to copy the copy-protected software became available. Other copyright protection methods were then developed in an attempt to stop piracy, also with limited success. These attempts included requiring a master floppy disk to be inserted into the computer or requiring the user to enter a key or other information contained in the user manual or license agreement when executing the software from the computer's hard drive. Still others required a hardware key to be present in the computer's parallel port, which was read when the software was executed. Software vendors received a temporary reprieve when CD-ROMs became the standard media for digital storage and distribution of software, because applications grew to be so large that the only means for copying the software was to "bum" duplicates on expensive recordable CDS. However, the prices of recordable CDS and the drives to write recordable CDS have fallen dramatically and pirates can once again produce cheap illegal copies of protected software.

The music and video industries have a different concern than the software vendors. These industries are particularly concerned with pirates making perfect copies of digitally stored music and videos. While copying of music and video for non-commercial purposes is allowed, such copying has historically been performed by tape decks and video cassette recorders using analog recording techniques. Analog reproduction results in decreasing quality with every generation, whereas digital copies are exact and suffer no fidelity loss. As noted, prices of recordable CDS and the drives to write to recordable CDS have fallen dramatically and these drives can just as easily record music to the CDS as they record software and data. Further, with the advent of the Digital Versatile Disk (DVD), full length motion pictures may now be recorded to a single DVD disk. As a result, the music and video industries also have a growing need to prevent copying of digitally recorded works.

Fueling the concern of software vendors and the music and video industries is the rapid growth of the digital age and global communications. In the early 1980's when the personal computer (PC) was in its infancy and software vendors first attempted to protect their intellectual property, there were few, if any, mass distribution channels. At the same time period, the music and video industries were strictly analog at the consumer level. Thus, piracy was not a major factor as it was limited to small groups of people or organizations. However, with powerful computers on every desktop and the evolution of music and video into a digital format, piracy has become a major factor costing software vendors alone $4 billion a year worldwide. Clearly, the financial loss to software developers, musicians, actors, and their associated industries is immense.

At the root of the global communications expansion is the rapid growth of the Internet, which has pushed the piracy problem to the forefront. As is well known in the art, the term "Internet" was first used in 1982 to refer to the enormous collection of interconnected networks that use Transmission Control Protocol/Internet Protocol (TCP/IP) protocols. Despite only gaining mass recognition over the past four years, the Internet has existed since the late 1960's and was originally designed as a Wide Area Network (WAN) that would survive a nuclear war. Throughout the 1970's and 1980's a growing number of small networks developed and connected to the Internet via gateways as a means of exchanging electronic mail. In the mid 1980's there was a significant growth in the number of available Internet hosts, and since the late 1980's, the growth of the Internet has been exponential. The growth of the Internet has provided people all over the world with a means to share and distribute information. Thus, the potential now exists for the mass distribution of pirated software, music and video on a global scale. Many Internet Usenet groups and channels on the Internet Relay Chat (IRC) are dedicated to the trading of pirated files, music and videos. Furthering the piracy problem are groups that maintain a high profile and take a great deal of pride in their piracy accomplishments. The piracy problem has grown so large that a new term, "warez," is used to describe the pirates and their activities. The Internet now provides a great potential for legitimate sales and distribution of protected software, music and videos, because of its size, speed and penetration into the homes of consumers. However, these very advantages make it easy for pirates to steal expensive, proprietary software that took years to design and manufacture and within hours make it available to anyone, free for the taking.

WO 96 35158 A discloses a management method and apparatus for copyright protection of programs-on-demand. Said method and apparatus enable the distribution of electronic data but said data is not well protected since it is not encrypted.

EP-A-0 665 486 teaches a method of protecting electronically published materials using cryptographic protocols. Nevertheless, said method implements known complex and heavy protocol for encrypting the data where the user has to provide the system with an identifier and the system sends back a secret key. If one illicitly obtains said secret key, the protected data may be viewed or displayed easily. In addition, the data are decrypted when received by the user who may then copy or distribute them.

In view of the above, there is a need for a secure method and apparatus for electronic distribution of data which will take advantage of the wide distribution of networks such as the Internet, while simultaneously preventing unauthorized and illegal copies of protected works, data and applications. In particular, there is a need for a method and apparatus which will provide vendors of software, music and videos with a secure means of electronically distributing their works and applications over the large networks, while ensuring that their protected works and applications are not copied and pirated. Such a method and apparatus would also ensure that the rights of owners of intellectual property are protected and that owners are properly compensated for their creative efforts.

### SUMMARY OF THE INVENTION

In view of the above, the present invention, through one or more of its various aspects and/or embodiments is thus presented to accomplish one or more objects and advantages, such as those noted below.

According to the present invention, there is provided a method of electronically distributing electronic data from a server to a client device via a network infrastructure. The method utilizes a unique identifier of one piece of media to associate the electronic data with only the one piece of media. The method comprises establishing a connection between the client device and the server via the network infrastructure, transmitting the unique identifier of the one piece of destination media to the server, encrypting the electronic data to be communicated to the client, communicating the electronic data to the client device, wherein the electronic data is in an encrypted format, and writing the electronic data to the one piece of media such that the information may be accessed for use from only the one piece of destination media, wherein said encrypting of said electronic data to be transmitted to the client device comprises encrypting at least one of said electronic data and an encryption key to said electronic data, said encrypting using said unique identifier as an encryption key.

In accordance with a feature of the invention, transmitting the unique identifier to the server comprises accessing the one piece of destination media, reading the unique identifier from a predetermined location on the one piece of destination media, and formatting the unique identifier into a first data structure for communication to the client device. The predetermined location on the one piece of destination media may be a predetermined track. Additional information may be communicated to the remote server, such as a purchaser's identification, address, telephone number, and payment information. In addition, the additional information may be encrypted together with the electronic data.

According to yet another feature of the present invention, establishing a connection between the client device and the server via the network infrastructure comprises submitting a form to the server, executing a program to process the form, and sending a metatag and transaction file. The metatag and the transaction file may be used to launch a client program at the client device after being sent to the client device. In addition, the client program may open the transaction file and parse metadata from metatags within the transaction file. The client may connect to a server address identified by a predetermined metatag in the transaction file to receive the electronic data, and the server address may be dynamically changed as the electronic data is requested from the server.

According to another aspect of the present invention, there is provided a method of accessing electronic data stored on a media by a first device adapted to read the media, where the electronic data has been written to the media in an encrypted format. The method comprises accessing the electronic data on the media, reading a unique identifier of the media, reading a portion of the electronic data from the media, and decrypting the electronic data using the unique identifier as a decryption key.

According to a feature of the present invention, the reading of the unique identifier comprises reading the unique identifier from a predetermined track of the media. The reading the unique identifier of the media may further comprise communicating the unique identifier to a second device, and the reading at least a portion of the electronic data further comprises communicating the portion of the electronic data to the second device, wherein the second device performs the decrypting the electronic data using the unique identifier as a decryption key.

According to another feature, the method may further comprise communicating an authentication code to the first device, reading the unique identifier from the media, comparing the authentication code to the unique identifier, and if the authentication code equals the unique identifier, generating a verification code which is communicated to the second device.

According to yet another feature, the method may further comprise reading a predetermined string from the media. decrypting the predetermined string, comparing the predetermined string with a known string, and halting the method if the predetermined string does not equal the known string.

According to another aspect of the present invention, there is provided a system for distribution of electronic data over a network infrastructure, comprising at least one client device for operation by a user desiring to receive the electronic data, and at least one server, that contains the electronic data and offers the electronic data for downloading to the at least one client device via the network infrastructure. The client device communicates a unique identifier to the at least one server, where the unique identifier is associated with a particular piece of media to which the electronic data is to be stored. Also, the server encrypts the electronic data using the unique identifier as a key and downloads the encrypted electronic data to the at least one client computer, and the client computer writes the encrypted electronic data to the particular piece of media such that the encrypted electronic data may only be accessed from the particular piece of media.

According to a feature of the present invention, the client device further submits a form to the at least one server, wherein the form is processed by the at least one server and the server communicates a metatag and transaction filed to the at least one client. The metatag and the transaction file launch a client program at the client device after being communicated to the client. Further, the client program may opens the transaction file and parse metadata from metatags within the transaction file and connect to a server address identified by a predetermined metatag in the transaction file to receive the electronic data. The server address may be dynamically changed by the at least one server as the electronic data is requested from the at least one server.

According to yet another aspect of the present invention, there is provided an apparatus for reading encrypted electronic data associated to one piece of media by a unique identifier contained on the one piece of media, comprising a processor which controls and executes instructions to read the electronic data and the unique identifier from the one piece of media, and a media drive, responsive to the processor, which reads the unique identifier and the electronic data from the one piece of media. The electronic data is decrypted for use by the apparatus or another device attached to the apparatus using the unique identifier as a data key, and the data is accessible from only the one piece of media having the unique identifier, and the data is not accessible from any other media having a different or no identifier. The unique identifier may be located on a predetermined track of the one piece of media.

According to another feature of the present invention, the apparatus includes an application specific integrated circuit that performs the decryption. The apparatus may further comprise an analog to digital converter, wherein the application specific integrated circuit decompresses the electronic data and the analog to digital converter converts the decompressed electronic data into audio signals.

According to yet another feature of the present invention, the media drive further comprises an application specific integrated circuit, the application specific integrated circuit of the media drive performs the decryption, and the decrypted electronic data is passed to the apparatus.

According to still another feature of the present invention, the media drive reads a predetermined string from the media, and the processor decrypts the predetermined string and compares the predetermined string with a known string, and the apparatus is halted if the predetermined string does not equal the known string.

According to yet another aspect of the present invention, there is provided an apparatus for reading encrypted electronic data associated to one piece of media by a unique identifier contained on the one piece of media. The apparatus is connected to a general purpose computer having a media drive which reads the unique identifier and the electronic data from the one piece of media. The apparatus comprises an application specific integrated circuit which controls and executes instructions to accept the electronic data and the unique identifier from the general purpose computer. The electronic data is decrypted for use by the apparatus using the unique identifier as a data key, and the data is accessible from only the one piece of media having the unique identifier, and the data is not accessible from any other media having a different or no identifier. The unique identifier may be located on a predetermined track of the one piece of media.

According to a feature of the present invention, the application specific integrated circuit performs the decryption. The apparatus may further comprise an analog to digital converter, wherein the application specific integrated circuit decompresses the electronic data and the analog to digital converter converts the decompressed electronic data into audio signals.

According to yet another aspect of the present invention, the media drive reads a predetermined string from the media, and the application specific integrated circuit decrypts the predetermined string and compares the predetermined string with a known string, and the apparatus is halted if the predetermined string does not equal the known string.

Other features of the invention are described below.

### BRIEF DESCRIPTION OF THE DRAWINGS

The foregoing summary, as well as the following detailed description of the preferred embodiments, is better understood when read in conjunction with the appended drawings. For the purpose of illustrating the invention, there is shown in the drawings an embodiment that is presently preferred, in which like reference numerals represent similar parts throughout the several views of the drawings, it being understood, however, that the invention is not limited to the specific methods and instrumentalities disclosed. In the drawings:
Figure 1 is an exemplary computer network environment in which the present invention may be implemented;
Figure 2 is a block diagram of the components of a client PC/Workstation shown in Figure 1;
Figure 3 is a block diagram of the components of a preferred media drive shown in Figure 2;
Figure 4 is a block diagram of the components of an exemplary stand alone device shown in Figure 1;
Figure 5 is a block diagram of the components of an exemplary decryption/decompressing device shown in Figure 1;
Figure 6 is a flow chart illustrating an overview of the processes performed in the electronic distribution of data in accordance with the present invention;
Figure 7 is a flow chart of the processes performed during a communications session between a client and a server to request and download data in accordance with the present invention;
Figure 8 is an exemplary format of a file containing parameters that are passed to a client program which controls a data download process;
Figure 9 is a flow chart of the processes performed by PC/Workstation or stand-alone machine during the reading/execution/playback of the protected data; and
Figures 10A and 10B are a flow charts of the processes performed by the decryption/decompressing device during the read/playback of data.

### DETAILED DESCRIPTION OF THE PREFERRED EMBODIMENTS

The present invention provides for a secure method of transmitting sensitive and protected electronic data (protected content) from a remote server to a client computer or stand-alone device over a network infrastructure and for preventing the unauthorized distribution and copying of the data once it is delivered to the client computer or stand-alone device. As used herein, the term "data" includes all information that may be stored on a storage media, including but not limited to, executable files, linked library files, data files, databases files, audio files, and video files.

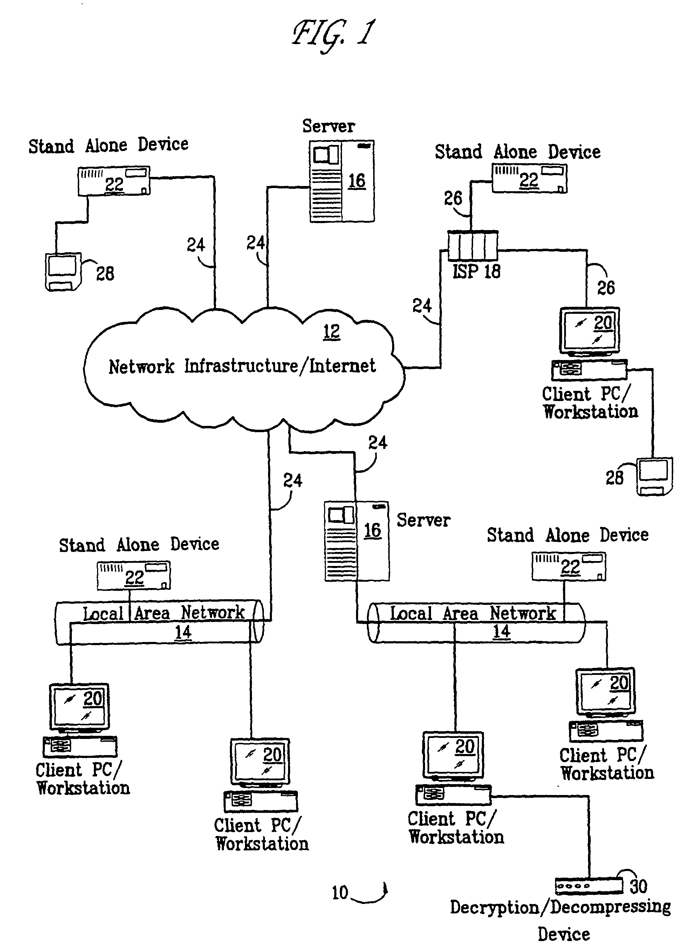

Referring to Figures 1-5, there is illustrated an exemplary, non-limiting, environment 10 and devices in which the present invention may be implemented. As shown in Figure 1, the environment 10 includes a Wide Area Network (WAN) infrastructure 12. The WAN infrastructure 12 may comprise a Transmission Control Protocol/Internet Protocol (TCP/IP) network such as the Internet. Attached to the WAN infrastructure 12, via communications lines 24, may be one or more Local Area Networks (LAN) 14, servers 16, Internet Service Providers 18, and stand alone devices 22 that are compatible with the protocols of the WAN infrastructure 12. As illustrated, the LAN 14 and ISP 18 may have attached thereto client PC/workstations 20 and/or stand alone devices 22 that may access the network infrastructure 12 via the LAN 14 or ISP 18, and that are capable of at least accessing and reading data on a removable media 28. Also shown is a data decryption/decompressing device 30, which is attached to a PC/workstation 20.

The LAN 14 may comprise an Ethernet or Token Ring network and have a server 16 and gateway (not shown) that provides a connection to the network infrastructure 12 via one or more communications links 24. The communication links 24 to the remote systems may be wireless links, satellite links, or dedicated lines.

The servers 16 may comprise, for example, UNIX-based or Windows NT Server-based computer platform having one or more processors (e.g., Intel Pentium II processor, Digital Equipment Company Alpha RISC processor, or Sun SPARC Processor), long-term storage (e.g., a RAID disk array), random access memory (RAM), communication peripherals (e.g., network interface card, modem, and/or terminal adapter), and application programs (e.g., database software applications, World Wide Web publishing/hosting software, and inventory management software) which may be used to distribute information to the client PC/workstations 20, stand alone devices 22, and other servers 16. The servers 16 may be configured as, for example, World Wide Web (WWW) servers, File Transfer Protocol (FTP) servers, electronic mail (E-mail) servers, etc. The ISP 18 typically is an organization or service that provides access to the Internet (network infrastructure 12) via a server (not shown) connected to the Internet by communications link 24. In exemplary embodiment of Figure 1, the client PC 20 or stand alone device 22 may utilize a dial-up connection 26 (via the public switched telephone network) to connect to the ISP 18.

The client PCS 20 may comprise Windows 95, Windows 98 or Windows NT Workstation-based personal computers having an Intel Pentium processor or higher, long-term storage (e.g, a IDE or SCSI hard disk), a removable media drive (e.g., CD-R, DVD-RAM, or other removable floppy or hard disk drive), random access memory (RAM), communication peripherals (e.g., network interface card, modem, and/or terminal adapter), and suitable application programs (e.g., Dial-up networking software and a Web Browser). If configured as a workstation, the workstations 20 may comprise, for example, UNIX-based IBM RS/6000 or SUN SPARCStation workstations. Further, the client PC/workstations 20 may comprise the so-called "network computing" devices.

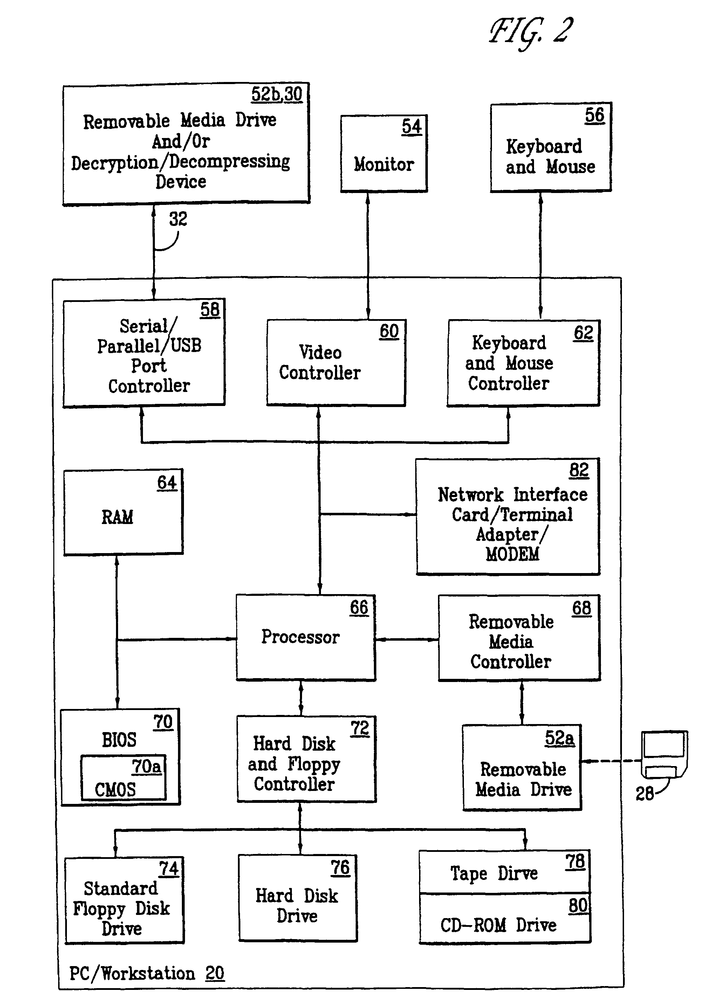

A block diagram of an exemplary PC/Workstation 20 is illustrated in Figure 2. As shown, the PC/Workstation 20 is divided between internal and external components. The internal components include a Basic Input/Output System (BIOS) 70 and a processor (CPU) 66 that control the overall functioning of the PC/Workstation 20. Memory 64, a hard disk drive 76, a floppy disk drive 74, a tape drive 78, a CD-ROM drive 80, a MODEM/Terminal Adaptor/Network Interface Card 82, and a removable media drive 52a are also connected to the CPU 66. The removable media drive 52a or 52b operates to read and/or write to a storage media contained within a removable storage cartridge 28. The exemplary PC/workstation 20 of Figure 2 is configured with two removable media drives 52a and 52b to emphasize that a removable media drive can be implemented in either internal or external form.

The MODEM/Terminal Adaptor/Network Interface Card 82 may comprise individual cards performing communications-related functions, as known in the art. The MODEM/Terminal Adaptor/Network Interface Cards 82 are included within PC/workstation 20 to provide communications to external networks to which the PC/workstation 20 is connected. In particular, the MODEM/Terminal Adaptor/Network Interface Card 82 may be used to access LAN 14, ISP 18 and network infrastructure 12.

Communications between internal and external devices may be accomplished via controllers provided within the PC/workstation 20. A serial/parallel/USB port controller (which may comprise separate controllers) 58, a monitor controller (video card) 60, and a keyboard and mouse controller 62 each provide an interface between the CPU 66 and an external removable media drive 52b (or printer), monitor 54, and keyboard and mouse device 56, respectively. A hard disk and floppy disk controller 72 serves as an interface between the CPU 66 and the hard disk 76 and the CD-ROM drive 80, and the floppy disk 74 and tape drive 78, respectively. It will be appreciated by those skilled in the art that the disk controller 72 may comprise separate floppy and hard disk controllers (e.g., IDE or SCSI controller).

A removable media controller 68 serves as an interface between the removable media drive 52a and the CPU 66. For example, the removable disk controller 68 may comprise a Small Computer System Interface (SCSI) or Integrated Drive Electronics (IDE) interface controller. A hard disk and floppy disk controller 72 serves as an interface between the CPU 66 and the hard disk 76 and the CD-ROM drive 80, and the floppy disk 74 and tape drive 78, respectively. Alternatively, the removable media drive 52a may utilize the disk controller 72 as an interface to the CPU 66.

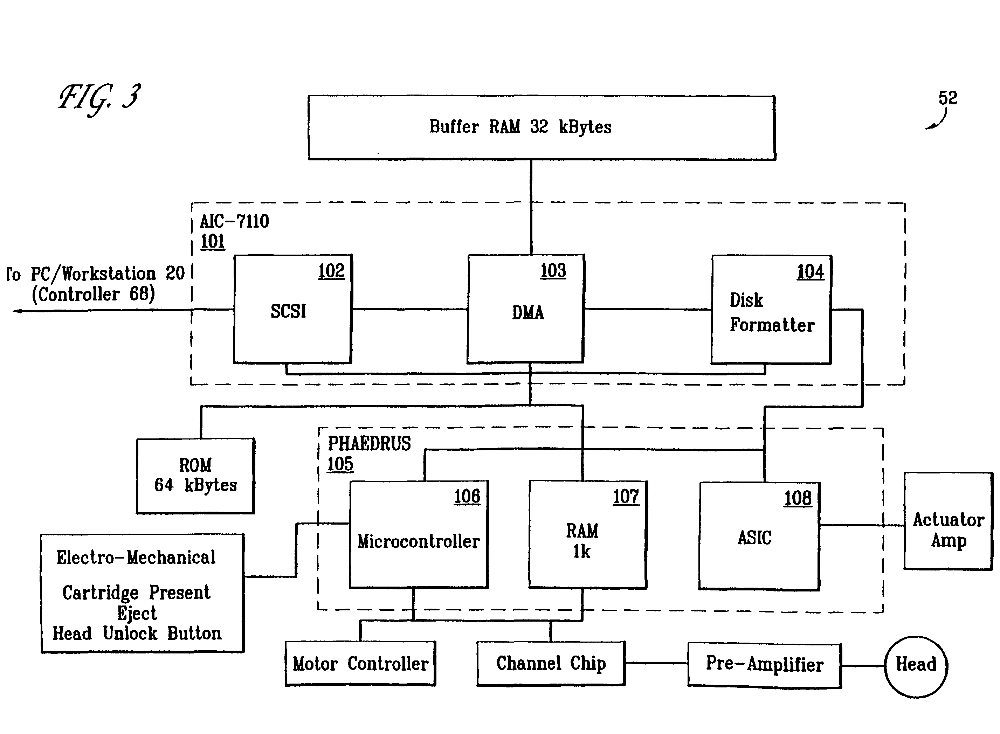

Referring now to Figure 3, there is illustrated a block diagram of an exemplary media drive 52 having a SCSI interface to the PC/workstation 20 (via controller 68). The media drive 52 preferably comprises, a ZIP® drive, manufactured by Iomega Corporation, Roy, Utah; however, other media drives may be used as media drive 52. The media drive 52 includes components that provide for communication between the read/write channel for the media (lower right side of diagram) and the PC/workstation 20 (upper left side of diagram). The media drive 52 includes an AIC chip 101 which performs the SCSI 102, the direct memory access (DMA) 103, and disk formatter 104 functions. The interface also includes a PHAEDRUS 105 which includes an 8032 microcontroller 106, a 1 kByte RAM 107 and an application specific integrated circuit (ASIC) 108. The ASIC 108 may perform various functions, such as servo sequencing, data splitting, EOC, ENDEC, A-to-D, and D-to-A conversion. The communication between the media drive 52 and the PC/workstation 20 is accomplished through transfers of data between the input/output channel of the media drive 52 and the media controller 68 (e.g., SCSI controller) of the PC/workstation 20.

Referring again to Figure 1, the stand alone devices 22, as used herein, may encompass any device capable of interacting with the network infrastructure 12, other than the "traditional" computing device (i.e., PCS, workstations, network computers, or terminals). For example, the stand alone device 22 may include devices such as WebTV®, available from WebTV Networks, Palo Alto, California, a music or video player, etc. It is noted that the stand alone device need not be provided with a communications connection to the network infrastructure, LAN, or ISP.

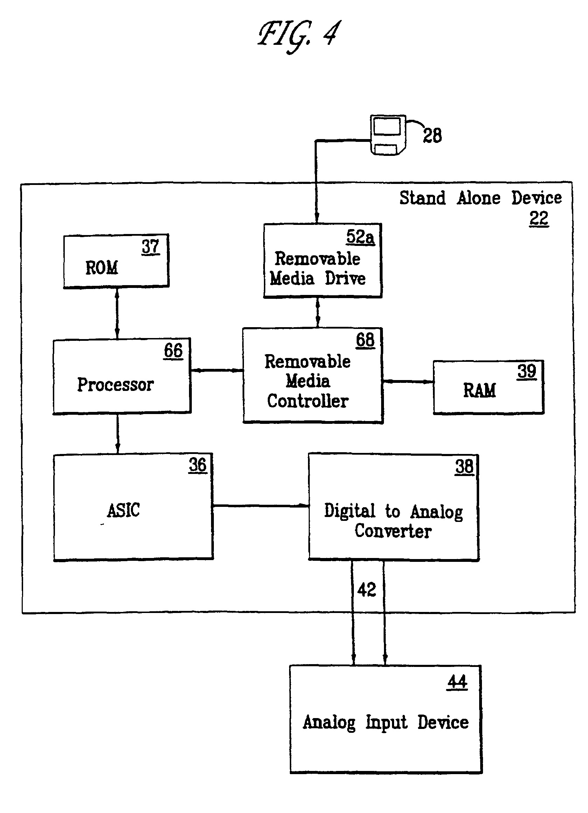

A block diagram of an exemplary stand alone device 22 is illustrated in Figure 4. The exemplary stand alone device 22 includes a removable media drive 52a, a removable media controller 68, a CPU 66, an ASIC/controller 36, a digital to analog converter 38, ROM 37, and RAM 39. As can be appreciated by one of skill in the art, the stand alone device 22 of Figure 4 may operate as a "player" or "viewer" of the protected data by reading the protected data from the media 28. The removable media drive 52a, the removable media controller 68, and CPU 66 each operate as described in the PC/Workstation 20 of Figures 1-3. ROM 37 contains instructions to control the operation and functions of the stand alone device 22. The ASIC/controller 36 may be used decrypt the protected data and output digital audio and/or video signals (e.g., Pulse Code Modulation (PCM)) to the digital to analog converter 38 for conversion to analog audio or video signals.

Referring again to Figure 1, there is illustrated a decryption/decompressing device 30 in accordance with the present invention, which is connected to the PC 20 to perform the reading/playback/execution of the protected electronic data. The decryption/decompressing device 30 differs from the stand alone device 22 in that the decryption/decompressing device 30 is not provide with a device (e.g., removable media drive 52) to read the media 28, but rather receives data which is read by, and communicated from, the PC/workstation 20.

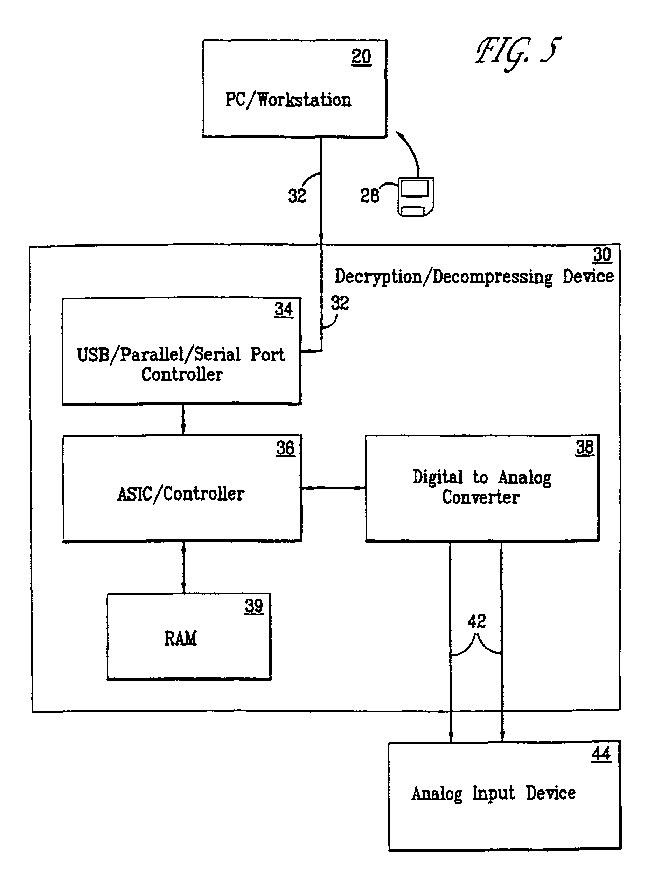

Referring now to Figure 5, there is illustrated a block diagram of an exemplary decryption/decompressing device 30. The decryption/decompressing device 30 may be connected to the PC/Workstation 20 via e.g., a universal serial bus (USB) connection, parallel port or serial port to receive the protected electronic data from the PC/Workstation 20 and may output analog audio and video signals via analog communications lines 42 to an external analog input device 44, such as a stereo amplifier, television, video cassette recorder or sound card. The decryption/decompressing device 30 includes a USB/parallel/serial port controller 34, an ASIC/controller 36, a digital to analog converter 38, and RAM 39. The USB/parallel/serial port controller 34 interfaces with the USB/parallel/serial port of the PC/workstation 20 via lines 32 to provide communications between the decryption/decompressing device 30 and PC/workstation 20. The USB/parallel/serial port controller 34 also provides for communication of data between the PC/workstation 20 and the ASIC/controller 36. The ASIC/controller 36 may decrypt the protected data and output digital audio and/or video signals (e.g., Pulse Code Modulation (PCM)) to the digital to analog converter 38 for conversion to analog audio signals.

Alternatively, the decryption/decompressing device 30 may be provided as a card which is installed within the PC/workstation 20. Such a decryption/decompressing device 30 may communicate to the PC/workstation 20 via the internal bus (e.g., ISA, PCI or AGP) of the PC/workstation 20 instead of via the USB/parallel/serial port. Further, the decryption/decompressing device 30 in this alternative configuration would be provided with an interface to enable communications with the internal bus of the PC 20.

It is noted that the exemplary environment and devices shown in Figures 1-5 are not limited to the illustrated environment, as other network infrastructures, communications connectivities, and devices are intended to be within the scope and spirit of the present invention.

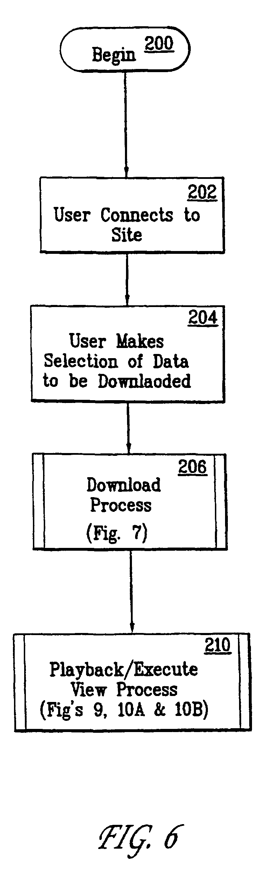

Referring now to Figure 6, there is shown an overview of the processes performed in accordance with the electronic distribution model of the present invention. As will become evident to those of skill in the art, the features and aspects of the present invention may be implemented by any suitable combination of hardware, software and/or firmware. In accordance with the present invention, the network server or servers 16 may store data, such as application software, database tables, music, video, etc. for distribution to clients 20 and/or stand-alone devices 22. The present invention, while applicable to all types of data transfer, is especially applicable to commerce over the Internet, and in particular, to electronic distribution and delivery of software, music and video data.

The user initiates the electronic data distribution process at step 200 when he or she desires to purchase software, music or videos (i.e., protected electronic data) using a home personal computer 20 or stand alone device 22. The protected electronic data may be offered for sale for a fee from e.g., a World Wide Web (WWW) site residing on one of servers 16, and purchased using a credit card, debit card, smart card, virtual cash, etc. To this end, the home user may connect (step 202), via an Internet browser such as Internet Explorer available from Microsoft, Redmond, WA, to the WWW site by entering the universal resource locator (URL) or "clicking" a hyper-text link that contains the WWW site's URL. The URL may contain, e.g., an Internet Protocol (IP) address (e.g., 147.178.20.151) or a domain name (e.g., "sitename.com") that identifies the IP address of the site such that the browser may establish a TCP/IP connection. Once connected, the user makes a selection of protected electronic data to be downloaded to his or her PC 20 (step 204) and the WWW server starts the download process (step 206) in conjunction with helper applications running on the client PC/workstation 20 using well known protocols (e.g., HTTP).

In accordance with the present invention, the downloaded protected electronic data is encrypted during the download process using a unique identifier (e.g., serial number) of the media 28 as an encryption key and downloaded directly to media 28. The encrypted protected electronic data is then associated to the media 28 by the unique identifier and may not be accessed from any other media having a different or no unique identifier. As will be described below, upon playback/execution/viewing of the protected electronic data in a PC 20, stand alone device 22 or decryption/decompressing device 30 (step 210), the data is decrypted using the unique identifier of the media 28 as a decryption key and subsequently made available to the PC 20, stand alone device 22 or decryption/decompressing device 30. Thus, any protected electronic data that is copied from the destination media 28 to other storage devices will be unusable, as the other storage devices will not have the same unique identifier as the destination media 28. Such a system would prevent unauthorized copying of the protected electronic data, protecting the intellectual property rights of the seller or owner of such rights.

The overview illustrated in Figure 6 will now be described in greater detail with reference to Figures 7-9. Figure 7 illustrates the download process of electronically distributing data over the network 12 from a server 16 to a client PC/workstation 20 or stand alone device 22. As noted above, the protected electronic data will be downloaded to a particular piece of media having a unique identifier so that the data will be associated with the particular media and accessible from only the particular media.

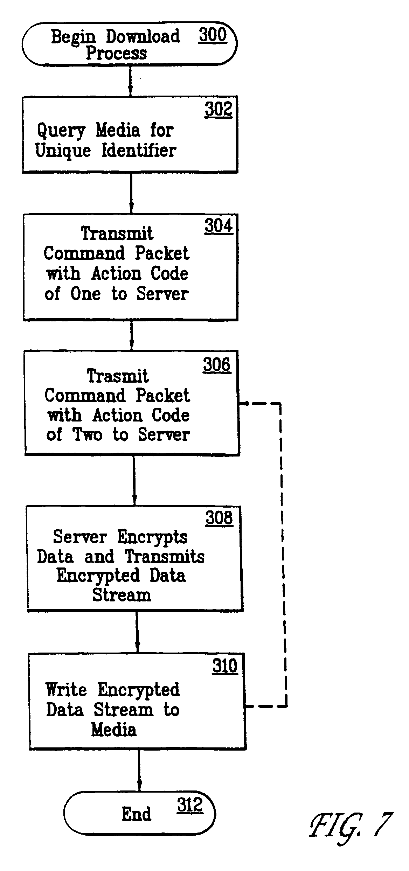

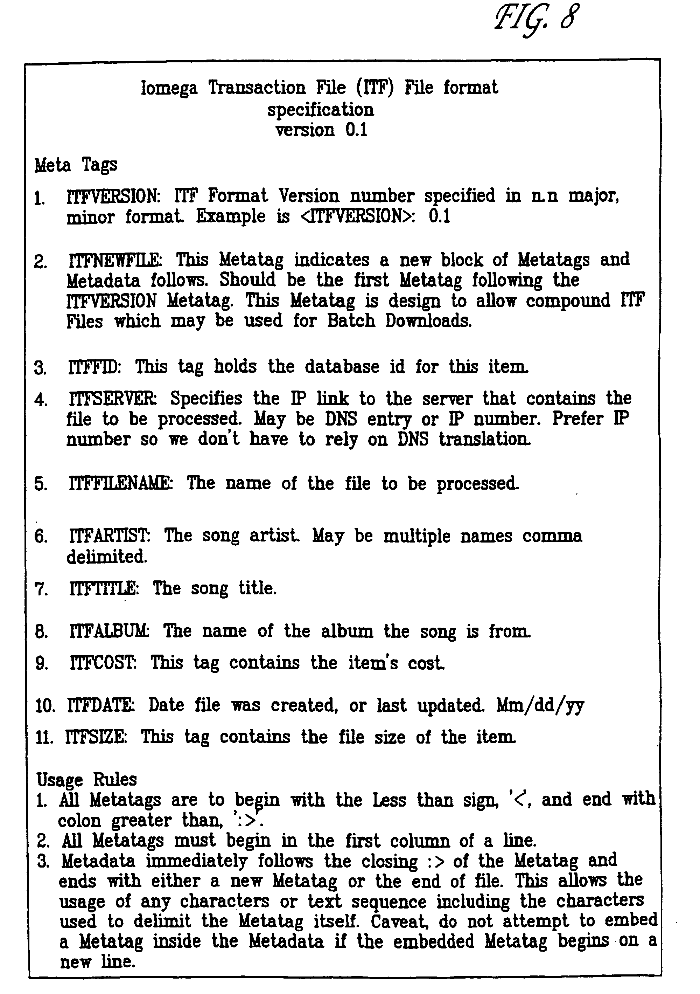

At step 300 the process begins after a user on the client PC 20 has contacted and connected to a server 16 (Web server) via, e.g., a Web browser, and makes a selection of protected data for downloading. It is preferable, that the Web sever 16 comprises an Iomega store web server 16, which will be described below. It is also preferable that the connection to the Web server is a secure (i.e., encrypted) connection. After the user clicks on the download button of the displayed web page from the Web server, this action causes the PC/workstation to submit an HTML form to the web server 16. The web server 16 then executes the appropriate Common Gateway Interface (CGI) program. The CGI program running on the Iomega store web server 16 sends the metatag "Content-Type: application/x-itf' followed by an appropriate Iomega Transaction File (ITF) to the client PC/workstation 20. The ITF file is unique to the Iomega store web server 16 and is used to provide information to an ITF client program which controls the download process at the client side. The format of the ITF file is shown in Figure 8. As the web browser receives the metatag, it launches the ITF client program and passes the ITF file name as a command line parameter. The ITF client application opens the ITF file and parses the metadata from the metatags. The client PC/workstation 20 connects to the server address provide by the ITFSERVER tag to receive the electronic data (see step 308). The server address may be dynamically changed for each request in order to balance the load on the server. For example, the ITF file may include the following information for a transfer of a single file containing a song:
<ITFVERSION:>0.1
<ITFNEWFILE:>
<ITFID:>2
<ITFSERVER:> 147.178.20.151
<ITFFILENAME:>D:\WebSite\htdocs\html\ZipMan\Samples\AceOfBase.mp3
<ITFARTIST:>Ace of Base
<ITFTITLE:>The Sign
<ITFALBUM:>The Sign
<ITFCOST:>$2.50
<ITFDATE:>3/4/98
<ITFSIZE:>4746500

At step 302 the client PC 20 queries the particular piece of media 28 to which the downloaded content is to be stored for the media's unique identifier. By way of a non-limiting example, the media 28 may comprise a ZIP® disk manufactured by Iomega Corporation, Roy, Utah. Each Iomega ZIP® disk contains a unique serial number that is written to a predetermined track during the formatting process which may be used as the unique identifier. Further, while the media 28 has been described in terms of a ZIP® disk, it is not limited to the ZIP® disk, as the use of other removable and permanent media types having a unique identifier is within the scope and spirit of the present invention such as CD-R, DVD-RAM, and other removable floppy and hard disks.

The client PC 20 may query the media using an application programming interface (API) such as the Iomega Ready API, or other suitable method. The Iomega Ready API when invoked causes the media drive to read the unique serial number from the predetermined track by using the SCSI 0x06 Non-Sense Command. In particular, by invoking the Disk Status Page (page 0x02) of the Non-Sense Command, the media serial number may be determined by reading offset bytes 20-59 of the returned data structure. Exemplary source code for performing step 302 in conjunction with an Iomega ZIP® drive and disk is as follows:

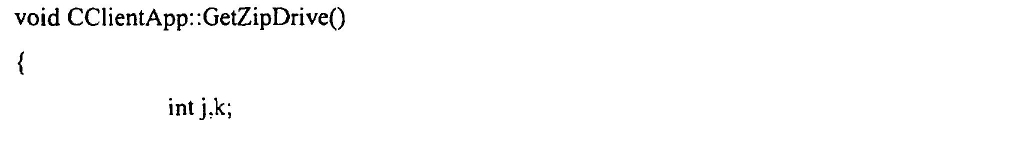

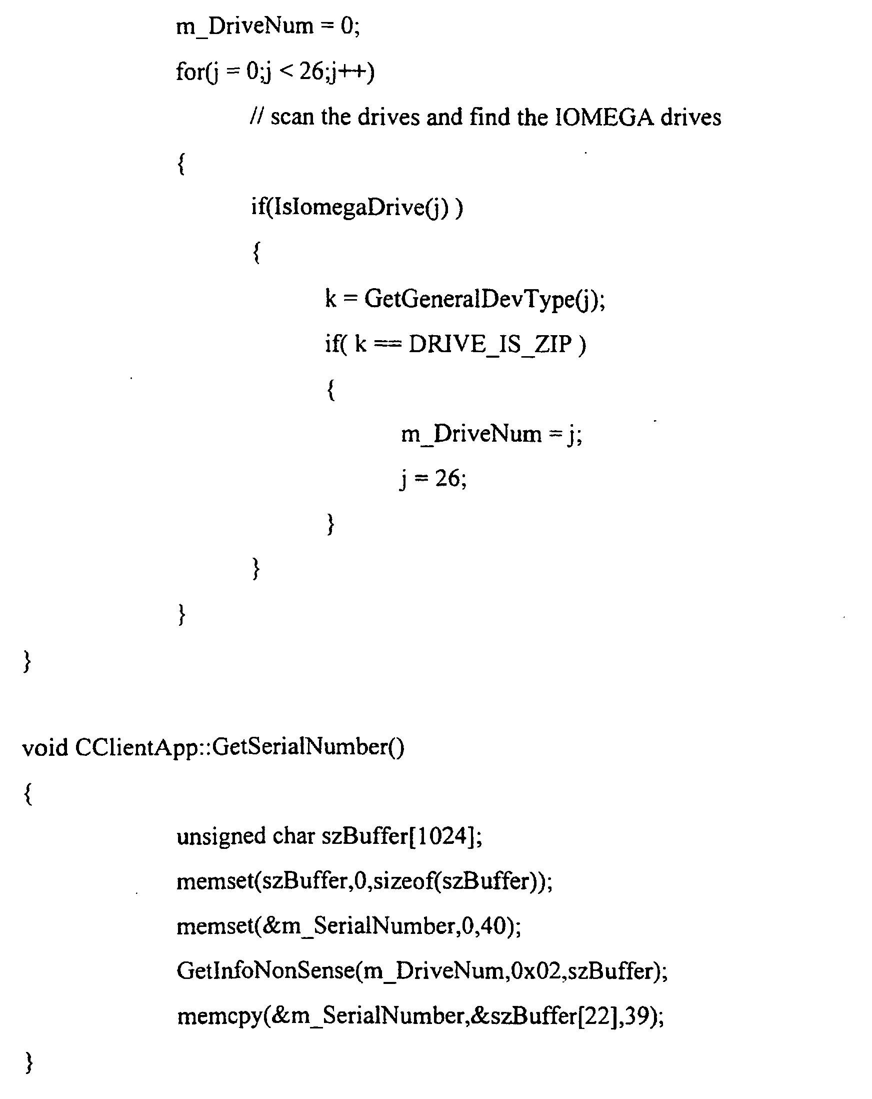

It can be appreciated that the unique identifier is not limited to information stored on the media 28 such as the serial number, and that other types of information could be used as the unique identifier. In addition, the unique identifier should contain a sufficient number of bits (length) to ensure that no two pieces of media have the same identifier. For example, each Iomega ZIP® disk contains a unique 39 byte (312 bits) serial number, and other bit lengths may be utilized.

Once the client PC 20 is connected to the server 16 identified in the ITFSERVER tag (e.g., 147.178.20.151), the client sends a command packet to the server via TCP/IP sockets at step 304. The first command packet has an action code of one and contains the file name to be transferred, all the customer information, billing information, and the unique identifier of the media. The first command packet may be formatted as follows: 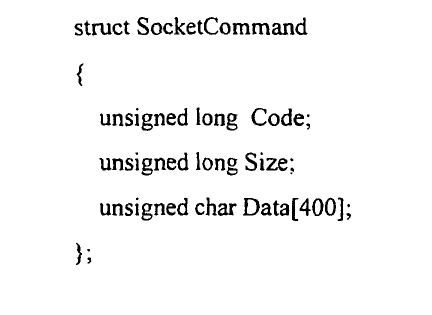 The server responds with a data packet with the same action code and informs the client that the file has been opened and the file size.

Alternatively, the Data field may comprise a plurality of fields containing the customer information, billing information, and the unique identifier as parsed fields. The data field may be formatted to have the following data structure:

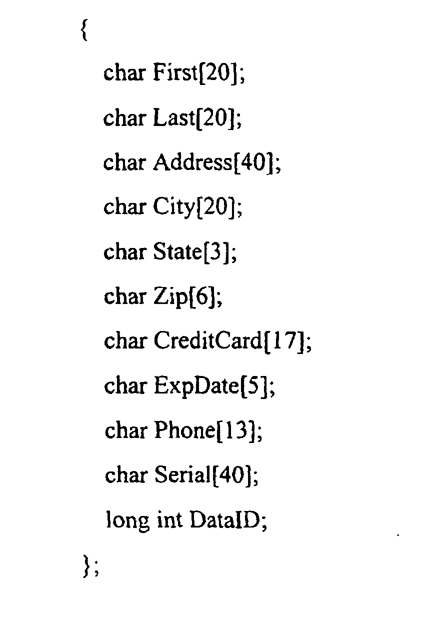

At steps 306-310 the client sends a command packet with an action code of two (step 306), which informs the server to send the next 4000 bytes of data encrypted the unique identifier. This action code is repeated until the entire file has been transferred from the server 16 to the client PC 20. The server 16 encrypts the data key for the digital content to be downloaded using the unique identifier (and any additional information) as an encryption key (step 308). While any suitable encryption algorithm may be utilized at step 308, the data encryption is preferably performed using the well known Blowfish encryption algorithm. The Blowfish encryption algorithm is advantageously fast, especially when implemented on 32-bit microprocessors with large data caches, such as the Intel Pentium and the IBM/Motorola PowerPC. Briefly, Blowfish is a variable-length key, 64-bit block cipher which may be implemented in either hardware or software. The algorithm consists of two parts: a key-expansion part and a data-encryption part. The key expansion part converts a key of at most 448 bits into several subkey arrays totaling 4168 bytes. The data encryption occurs via a 16-round Feistel network, wherein each round consists of a key-dependent permutation and a key- and data-dependent substitution. All operations are exclusive ORs (XOR) and additions on 32-bit words. The only additional operations are four indexed array data lookups per round to generate the encrypted data.

In accordance with the present invention, the server 16 may store digital content to be downloaded in an encrypted or unencrypted format. If the digital content to be downloaded is not stored in an encrypted format, then it is preferably encrypted upon downloading using the unique identifier as an encryption key. If the digital content to be download is stored on the server 16 in an encrypted format (pre-encrypted) prior to downloading then the server would need only to encrypt the data key to the content (i.e., the software application, music or video). Pre-encryption may be preferable to provide greater performance in environments where large amounts of data need to be encrypted per transaction. Such electronic distribution systems may be heavily burdened if they were required to encrypt the entire content that is to be electronically distributed. However, it may be preferable to double encrypt the downloaded content at step 308 by encrypting the pre-encrypted content and the data key to the pre-encrypted content using the unique identifier (and any additional information) as an encryption key. Such a technique would greatly increase the security of the data to be transmitted, as the data may be double encrypted prior to transmission to the client, as noted above. While the process at step 308 has identified encrypting the data key or the data key and the content, it is also possible that at step 308 that only the content to be transmitted is encrypted using the unique identifier as a key. If enhanced security is a concern, additional transaction information such as the purchaser's name, address, credit card number, etc. may be included with the content.

Also at step 308, the server transmits the data to the client, via, e.g., TCP/IP sockets, and the client PC 20 writes the data to the media 28 at step 310. The data may be written to the media 28 in a standard file system structure or by direct track or sector writes. The format by which the data is written to the media 28 is not limited to the noted formats. as other formats may be utilized. The data transmitted to the client PC 20 from the server 20 is preferably in a predetermined data structure such as the following:

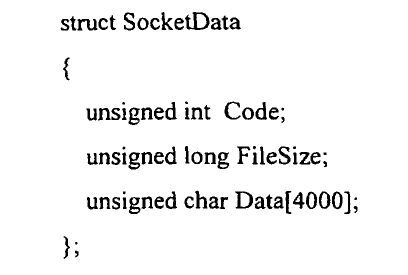

The process of step 306-310 repeats until all of the data has been downloaded from the server 16 to the client PC 20. At that time the client PC 20 will send an action code of three to inform the server 16 that the transaction is complete and to disconnect the socket (step 312). It is noted that the source code and data structures above are included herein for exemplary purposes only, and are in no way intended to limit the scope of the present invention.

As noted above, the data is stored on the media 28 in an encrypted format using the unique identifier as a decryption key. Accordingly, if the data is copied to any other media, the decryption process will fail rendering the content unusable. Thus, unauthorized copying of data downloaded using the apparatus and method of the present invention will be prevented. Further, while process described above refers to a client PC, the process is applicable to a stand alone device capable of communicating over the network infrastructure. and reading and writing to the media on which the protected electronic data is stored. For example, a kiosk may be provided at retail outlets where purchasers may insert a piece of media 28 into the kiosk and download data to be used on a home or office personal computer.

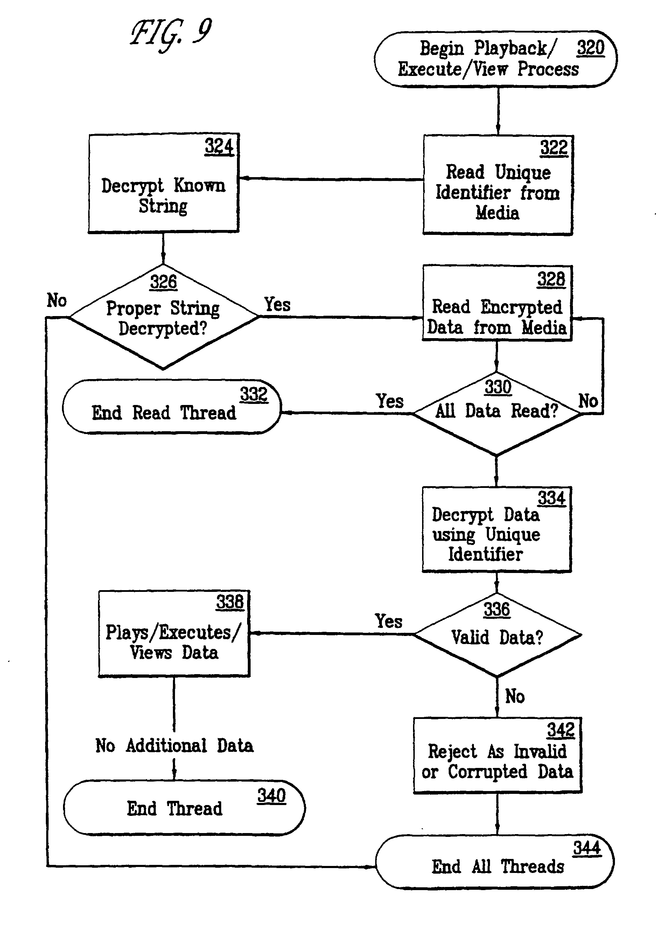

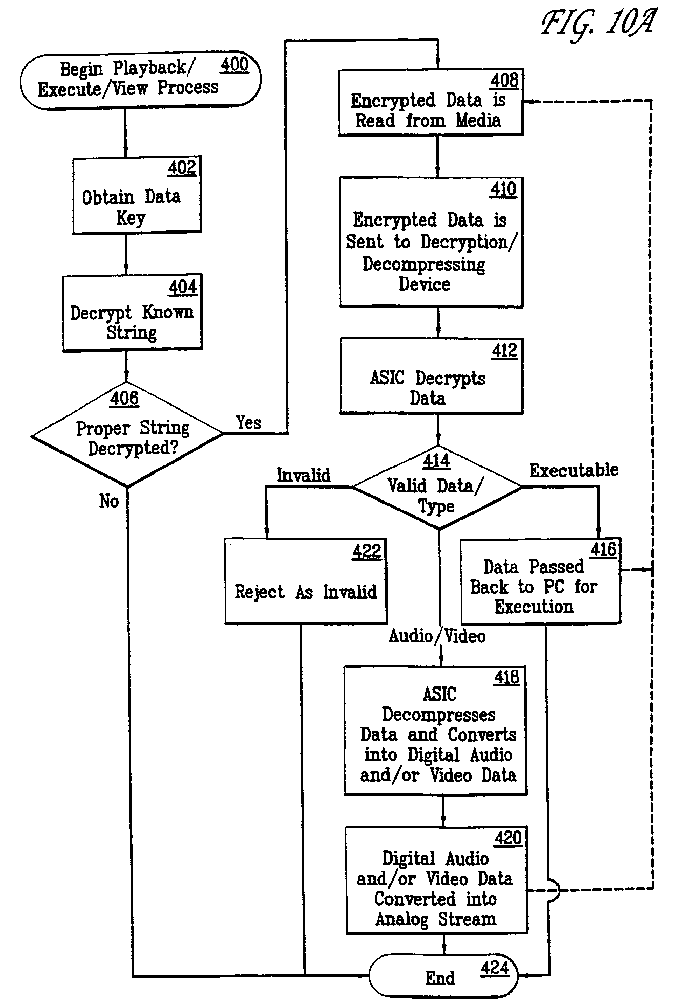

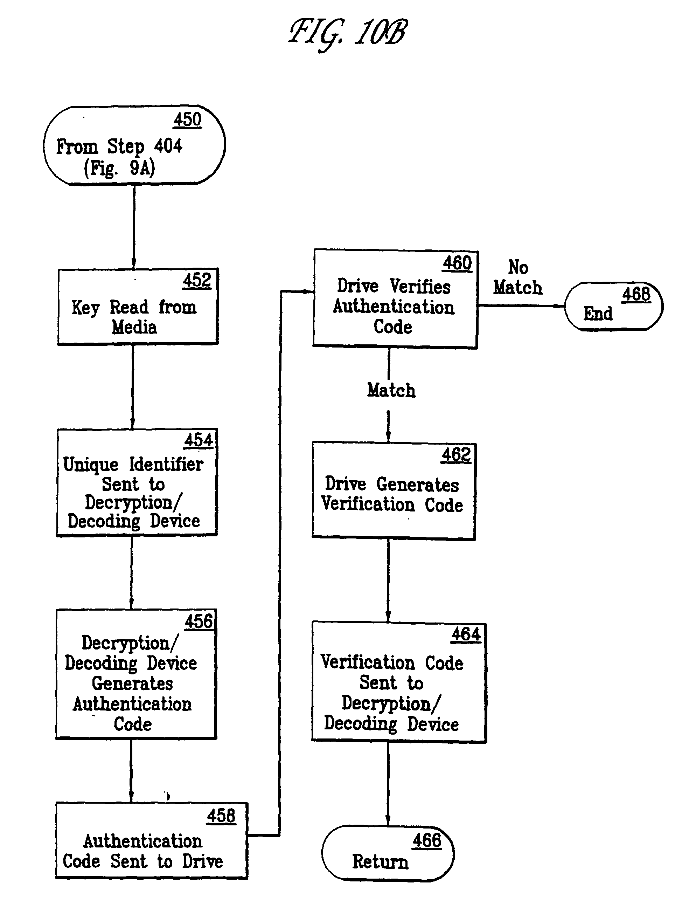

Referring now to Figure 9, there is illustrated the processes performed during a reading/execution/playback of the protected data once it has been written to the media 28. As will be appreciated by those of skill in the art, the process of Figure 9 may be executed in multiple threads to increase the performance of the playback/execution/viewing process. As will be described below, the protected data is decrypted using the unique identifier of the media 28 as a decryption key in order to present the PC 20 or stand alone device 22 with usable electronic data.

The playback/execution/viewing process begins at step 320 when the user places the media 28 within the PC 20 or stand alone device 22 and accesses the protected electronic data on the media 28. The user may access the protected data using a combination of software and hardware installed on the PC 20 or stand alone device 22.

At step 322 the PC 20 (or stand alone device 22) reads the unique identifier from the media 28 and stores the unique identifier in RAM 64 (RAM 39). As noted above, the media is preferably the Iomega ZIP® disk which contains the unique serial number on a predetermined track of each ZIP® disk; however, the media is not limited to the ZIP® disk and may comprise any media having an associated unique identifier. Also as noted above, the PC 20 software may utilize the Iomega Ready API to read the serial number at step 322 from the disk.

At step 324 the PC 20 (or stand alone device 22) decrypts a predetermined string contained on the media 28 using the unique identifier. The predetermined string is compared to a known string at step 326 to determine if a proper string is decrypted (i.e., the decrypted predetermined string equals the known string). If the predetermined string has been decrypted into the known string, the process continues at step 328 where the encrypted protected electronic data is read from the media 28. Otherwise, if the result of the decryption of the predetermined string was not the known string, then all threads end, stopping the playback/execute/viewing process at step 344.

At step 328 the PC 20 (or stand alone device 22) reads the encrypted data from the media 28 and temporarily stores the protected electronic data in RAM 64 (RAM 39). The reading process may be performed within a first thread running on the PC 20, and is performed in a manner analogous to writing the data to the media 28, e.g., via standard file system reads, or direct track or sector reads. The format by which the data is read from the media 28 is performed in accordance with the manner the data was written to the media, and, as in writing the data to the media 28 is not limited to the above-noted formats, as other formats may be utilized.

At step 330 it is determined if all of the protected data has been read from the media 28. If so, the read thread is ended at step 332. Otherwise, if there is additional data to be read, the read thread returns to step 328 to read additional protected data from the media 28. In accordance with an aspect of the invention, the entirety of the protected content need not be read from the media 28 at step 328, which reduces the amount of memory required to implement the decryption process. Also, because the processes of Figure 9 are executed in a multi-threaded fashion, the process of reading the protected data from the media 28 may be performed as other portions of the protected data are decrypted in a second thread or other hardware, as discussed below.

Also from step 330 a second thread decrypts the protected data (step 334) using the unique identifier of the media 28 (read at step 322) as a decryption key. The decryption of the data at step 334 is performed in accordance with the encryption algorithm, and preferably comprises the Blowfish algorithm, as noted above. The decryption may occur in software, or may be performed in hardware if a higher level of security is required. Further, as noted above, because the decryption runs in a second thread (or other hardware device), the decryption process may be performed simultaneously with the reading process at step 328.

At step 336 the decrypted data is verified to determine if it is valid data (i.e., usable). If the data is valid, the data is then executed/played/viewed by the PC 20 (or stand alone device 22) at step 338. The process of executing/playing/viewing may be performed in a third thread or other hardware device (e. g., sound card). If, however, the data is not valid or is corrupted at step 336, the process notifies the user at step 342 and ends all threads at step 344. Once all of the protected data is decrypted and played/viewed/executed, all threads comprising the processes of Figure 9 are ended at step 344. It is preferable to delete all temporary files containing unencrypted protected electronic data upon completion of the process at step 344 in orderto further enhance the anti-piracy features of the present invention.

Thus, by implementing the processes of Figure 9 in multiple threads, the processes of reading, decrypting and executing/playing/viewing the protected data may occur simultaneously in the PC 20 to increase performance.

It is noted that the PC/workstation 20 and stand alone device 22 have been described above as performing steps 320-344 in a similar fashion. However, because the PC/workstation 20 comprises a general purpose computer, there may be additional features of the present invention provided within the PC/workstation 20, which will be described below.

For example, When executing/playing/viewing the protected data on the PC/workstation 20, the software or hardware decryption process at steps 334 through 338 may be performed such that the protected electronic data is decrypted and an executable program is automatically launched to utilize the decrypted protected electronic data. Alternatively, the software or hardware decryption process may decrypt and validate the protected electronic data at steps 334 and 336 and store the decrypted data temporarily on the media 28, other media (e.g., hard disk 76) or in memory (e.g., RAM 64) for execution or use by other software or hardware applications at step 338. This alternative allows the user to play/execute/view the protected electronic data at a time after decrypting. In addition, if enhanced security is preferred, the protected electronic data could be stored in an encrypted form in RAM 64 at step 328 and temporarily decrypted at step 334 on an as-needed basis.

As noted above, the decryption process at step 334 (Figure 9) may be implemented in software or hardware. An exemplary first hardware implementation will be described with reference to Figures 2-4. As is well known in the art, an ASIC is a custom or semi-custom integrated circuit that may be designed to perform a variety of functions. Accordingly, the ASICs 108 and/or 36 may be designed to perform the decryption of step 334 in addition to the other functions performed by ASICs 108 and 36 noted above. It is preferable to implement the decryption process in the ASIC 108 and/or 36 to minimize the likelihood of unscrupulous pirates "hacking" the decryption software for the purpose of making illegal copies of the protected electronic data.

In the first hardware embodiment, the entirety of steps 320-344 of Figure 9 are performed within a single device (e.g., PC/workstation 20 or stand alone device 22). When the first hardware embodiment is implemented in PC 20, the encrypted data read from the media 28 is passed to the ASIC 108 (via the controller 68) for decryption (at steps 324 and 334) using the unique identifier of the media 28 as the decryption key. Once the protected electronic data is decrypted by ASIC 108, it is then passed back (via controller 68) to the PC 20 for validation and execution. By incorporating the decryption processing into the ASIC 108, the burden on the processor 66 will be advantageously reduced, speeding up any other operations being performed by the PC/workstation 20.

When the first hardware embodiment is implemented in the stand alone device 22, the encrypted data is passed to the ASIC/controller 36 (via the controller 68 and the CPU 66) for decryption at steps 324 and 334 using the unique identifier of the media 28 as the decryption key. Once the protected electronic data is decrypted and validated by ASIC/controller 36, it is converted to digital audio and/or video data passed to the digital to analog converter 38 for conversion to analog audio and video information. The analog information is then output to an analog input device 44, such as a VCR, tape deck, amplifier, sound card, etc., and the process ends at step 336.

A second hardware embodiment will now be described which distributes the processing between the PC/workstation 20 and the decryption/decompressing device 30 described with reference to Figure 5. The decryption/decompressing device 30 may operate, for example, as a special purpose media player attached to the PC 20. The decryption/decompressing device 30 is provided with the capability of receiving the protected electronic data from the PC 20, decrypting and decompressing (if necessary) the content, and providing audio and/or video outputs.

The operation of the second hardware implementation will be described with reference to Figures 10A and 10B. The process begins at step 400 when the user places the media 28 within the PC 20 and accesses the protected electronic data on the media 28. At step 402 the data key (i.e., unique identifier) to the protected data is obtained. The processes of step 402 are describe in detail with reference to Figure 10B.

Referring now to Figure 10B (step 450), processing begins at step 452 when the PC 20 reads the unique identifier from the media 28 and passes it to the decryption/decoding device 30 at step 454. As noted above, the media 28 is preferably the Iomega ZIP® disk which contains the unique serial number on a predetermined track of each ZIP® disk; however, the media is not limited to the ZIP® disk and may comprise any media having an associated unique identifier. The PC 20 software may utilize the Iomega Ready API to read the serial number from the disk, as noted above. At step 456 the decryption/decoding device 30 generates an authentication code, which is passed back to the PC 20 (media drive 52) at step 458. At step 460 the media drive 52 verifies that the authentication code passed from the decryption/decoding device 30 is the same as the unique serial number on the media 28 actually in the drive 52. If the authentication code does not correspond to the unique identifier, then the playback/execution/viewing process stops at 468. If the authentication code matches the unique identifier, then at step 462, the media drive 52 generates a verification code. The verification code is sent to the decryption/decoding device 30 at step 464 and the process returns to step 404 in Figure 10A. The two-step verification process of Figure 10B ensures that the unique identifier of the media 28 physically in the media drive 52 has the same unique identifier sent to the decryption/decoding device 30 at step 454 and further enhances the present invention's resistance to hacking. The unique identifier is stored in RAM 39 for use as the decryption key in the decryption process (steps 406 and 412).

Referring again to Figure 10A, at step 404 the decryption/decoding device 30 decrypts a predetermined string contained on the media 28 using the unique identifier. The predetermined string is sent to the decryption/decoding device 30 via the USB/parallel/serial port 58. The predetermined string is compared to a known string by the decryption/decoding device 30 at step 406 to determine if a proper string is decrypted (i.e., the decrypted string equals the known string). If the decrypted predetermined string equals the known string, the process continues at step 408 where the encrypted data is read from the media 28. Otherwise, if the decrypted predetermined string does not equal the known string, then the process ends at step 424.

At step 408, the encrypted data is read from the media 28 and sent via USB/parallel/serial port 58 to the decryption/decompressing device 30 at step 410. At step 412, the ASIC/controller 36 decrypts the protected electronic data received by controller 34. The decryption process is performed as noted above with reference to step 334 (Figure 9). As the protected electronic data is decrypted, the ASIC/controller 36 (or application software running on the PC 20) determines at step 414 the type of information that comprises the protected electronic data and if the decrypted data is valid. If the data is determined to be invalid at step 414, the user may be notified at step 422 and the process ends at step 424.

If at step 414 the protected electronic data is valid application software or a valid executable file, the decryption/decompressing device 30 may pass the decrypted file back to the PC 20 for execution at step 416. As illustrated in Figure 10A, the process of sending encrypted data to the decryption/decoding device 30 may loop through steps 408 through 416 until all of the data is read from the media 28 and passed back to the PC 20 for execution. After the all of the protected electronic data has been decrypted and passed back to the PC 20, the process ends at step 424.

If the protected electronic data is valid audio or video data, the decryption/decompressing device 30 may additionally provide for decompression of the audio or video data at step 418 in ASIC/controller 36. Typically, digital audio and video information is compressed according to standard compression algorithms. For example, full-motion video and audio information may be compressed using the Moving Pictures Expert Group (MPEG) standard and still pictures may be compressed using the Joint Picture Expert Group (JPEG) standard. The decompressed audio or video information may be converted to digital data (e.g., pulse code modulation (PCM)) at step 418 and sent to the digital to analog converter 38.

At step 420 the digital audio or video data is converted to analog audio or video signals by the digital to analog converter 38. The analog signals are output to an analog input device 44 (e.g., stereo amplifier, video cassette recorder, sound card or television) for playback/viewing. As illustrated in Figure 10A, the process of sending encrypted data to the decryption/decoding device 30 may loop through steps 408 through 420 until all of the data is read from the media 28. After all of the protected electronic data has been converted to an analog output, the process ends at step 424.

In accordance with the second hardware implementation, the protected data may be streamed from the PC 20 to the decryption/decompressing device 30, or alternatively, download to the RAM 39 in its entirety prior to decryption by the ASIC/controller 36.

The present invention advantageously utilizes the unique identifier of the media as an encryption key which allows any electronic data to be protected against copying. Additionally, by using the unique identifier of the media, rather than a hardware device, the protected electronic data may be read/played on any device capable of reading the media. Thus, the protected electronic data becomes portable and is tied only to a single removable media, allowing the protected electronic data to be shared while preventing the protected electronic data from being copied and read/played from another media. Further, present invention may be used in a single encryption method or multiple encryption method where the key to the protected electronic data itself is encrypted using the serial number of the disk as the key.

It is noted that the foregoing examples have been provided merely for the purpose of explanation and are in no way to be construed as limiting of the present invention. While the invention has been described with reference to preferred embodiments, it is understood that the words which have been used herein are words of description and illustration, rather than words of limitations. Further, although the invention has been described herein with reference to particular means, materials and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may effect numerous modifications thereto and changes may be made without departing from the scope of the invention in its aspects.

For example, fixed media having a unique identifier may be utilized by the present invention to receive protected electronic data. Also, the removable media need not be a removable media cartridge, but may comprise a removable drive, such as those which are removably connected to personal computers or other devices via, e.g., drive bays, device bays, and PCMCIA slots.

## Claims

1. A method of electronically distributing electronic data from a server (16) to a client device (20, 22) via a network infrastructure (12), said method utilizing a unique identifier of one piece of media (28) to associate said electronic data with only said one piece of media (28), said method comprising:
establishing a connection (200) between the client device (20, 22) and the server (16) via the network infrastructure (12);
transmitting, (304) via the network infrastructure (12), said unique identifier of said one piece of destination media (28) to the server (16);
encrypting (308), at the server (16), said electronic data to be communicated to the client device (20, 22);
communicating, via the network infrastructure (12), said electronic data to the client device (20, 22), wherein said electronic data is in an encrypted format; and
writing (310), at the client device (20, 22), said electronic data to said one piece of media (28), such that said information may be accessed for use from only said one piece of destination media (28),
wherein said encrypting (308) of said electronic data to be transmitted to the client device (20, 22) comprises encrypting at least one of said electronic data and an encryption key to said electronic data, said encrypting using said unique identifier as an encryption key.

2. The method as recited in claim 1, wherein said transmitting (304) said unique identifier to the server (16) comprises:
accessing said one piece of destination media (28);
reading (322) said unique identifier from a predetermined location on said one piece of destination media (28); and
formatting said unique identifier into a first data structure for communication to the client device (20, 22).

3. The method as recited in claim 2, wherein said predetermined location on said one piece of destination media (28) is a predetermined track.

4. The method as recited in one of claims 1 to 3, further comprising communicating additional information to the remote server (16).

5. The method as recited in claim 4, wherein said additional information comprises at least one of a purchaser's identification, address, telephone number, and payment information.

6. The method as recited in one of claims 1 to 5, further comprising:
communicating additional information to the remote server (16); and
encrypting additional information together with said electronic data, said additional information comprising at least one of a purchaser's name, address, telephone number, and payment information.

7. The method as recited in one of claims 1 to 6, wherein said encryption is performed using the Blowfish algorithm.

8. The method as recited in one of claims 1 to 7, wherein said electronic data is written to said one piece of destination media (28) in an encrypted format using said unique identifier as a decryption key.

9. The method as recited in one of claims 1 to 8, wherein said establishing a connection (200) between the client device (20, 22) and the server (16) via the network infrastructure (12) comprises:
submitting, from the client device (20, 22), a form to the server (16);
executing, at the server (16), a program to process said form; and
sending, to the client device (20, 22), a metatag and transaction file.

10. The method as recited in claim 9, wherein said metatag and said transaction file launch a client program at the client device (20, 22) after being sent to the client device (20, 22).

11. The method as recited in claim 10, wherein said client program opens said transaction file and parses metadata from metatags within said transaction file.

12. The method as recited in claim 11, wherein the client program connects to a server address identified by a predetermined metatag in said transaction file to receive said electronic data.

13. The method as recited in claim 12, wherein said server address is dynamically changed as said electronic data is requested from the server.

14. A system for distribution of electronic data over a network infrastructure (12), comprising:
at least one client device (20, 22) for operation by a user desiring to receive said electronic data; and
at least one server (16), said at least one server (16) containing said electronic data and offering said electronic data for downloading to said at least one client device (20, 22) via said network infrastructure (12),
wherein said at least one client device (20, 22) is adapted to communicate a unique identifier to said at least one server (16), said unique identifier being associated with a particular piece of media (28) to which said electronic data is to be stored,
wherein said at least one server (16) is adapted to encrypt said electronic data using said unique identifier as a key and to download the encrypted electronic data to said at least one client device (20, 22), and
wherein said at least one client device (20, 22) is adapted to write the encrypted electronic data to said particular piece of media (28) such that the encrypted electronic data may only be accessed from said particular piece of media (28).

15. The system as recited in claim 14, wherein said at least one client device (20, 22) is further adapted to submit a form to said at least one server (16), wherein said form is processed by said at least one server (16) and said server (16) is adapted to communicate a metatag and transaction filed to said at least one client device (20, 22).

16. The system as recited in claim 15, wherein said metatag and said transaction file are adapted to launch a client program at said at least one client device (20, 22) after being communicated to said at least one client device(20, 22).

17. The system as recited in claim 16, wherein said client program is adapted to open said transaction file and to parse metadata from metatags within said transaction file.

18. The system as recited in claim 17, wherein said at least one client program is adapted to connect to a server address identified by a predetermined metatag in said transaction file to receive said electronic data.

19. The system as recited in claim 18, wherein said server address is dynamically changed by said at least one server as said electronic data is requested from said at least one server.

## Patentansprüche

1. Verfahren zum elektronischen Verteilen von elektronischen Daten von einem Server (16) an eine Clientvorrichtung (20, 22) über eine Netzwerkinfrastruktur (12), wobei das Verfahren einen einzigartigen Bezeichner für ein Medienexemplar (28) verwendet, um die elektronischen Daten nur dem einen Medienexemplar (28) zuzuordnen, wobei das Verfahren umfasst:
Aufbauen einer Verbindung (200) zwischen der Clientvorrichtung (20, 22) und dem Server (16) über die Netzwerkinfrastruktur (12),
Übertragen (304) des einzigartigen Bezeichners für das eine Zielmedienexemplar (28) über die Netzwerkinfrastruktur (12) an den Server (16),
Verschlüsseln (308) der an die Clientvorrichtung (20, 22) zu übermittelnden elektronischen Daten an dem Server (16),
Übermitteln der elektronischen Daten über die Netzwerkinfrastruktur (12) an die Clientvorrichtung (20, 22), wobei die elektronischen Daten in einem verschlüsselten Format vorliegen, und
Schreiben (310) der elektronischen Daten an der Clientvorrichtung (20, 22) auf das eine Medienexemplar (28), so dass auf die Information zur Verwendung nur von dem einen Zielmedienexemplar (28) zugegriffen werden kann;
wobei das Verschlüsseln (308) der an die Clientvorrichtung (20, 22) zu übermittelnden elektronischen Daten das Verschlüsseln zumindest eines der elektronischen Daten und einen Verschlüsselungsschlüssel für die elektronischen Daten umfasst, wobei das Verschlüsseln den einzigartigen Bezeichner als Verschlüsselungsschlüssel verwendet.

2. Verfahren nach Anspruch 1, bei dem das Übertragen (304) des einzigartigen Bezeichners an den Server (16) umfasst:
Zugreifen auf das eine Zielmedienexemplar (28),
Lesen (322) des einzigartigen Bezeichners von einer vorbestimmten Stelle auf dem einen Zielmedienexemplar (28), und
Formatieren des einzigartigen Bezeichners in eine erste Datenstruktur für die Kommunikation mit der Clientvorrichtung (20, 22).

3. Verfahren nach Anspruch 2, bei dem die vorbestimmte Stelle auf dem einen Zielmedienexemplar (28) eine vorbestimmte Spur ist.

4. Verfahren nach einem der Ansprüche 1 bis 3, das weiter das Übermitteln zusätzlicher Information an den entfernten Server (16) umfasst.

5. Verfahren nach Anspruch 4, bei dem die zusätzliche Information zumindest eines aus einer Käuferidentifikation, einer Adresse, einer Telefonnummer und einer Zahlungsinformation umfasst.

6. Verfahren nach einem der Ansprüche 1 bis 5, das weiter umfasst:
Übermitteln zusätzlicher Information an den entfernten Server (16) und
Verschlüsseln der zusätzlichen Information gemeinsam mit den elektronischen Daten,
wobei die zusätzliche Information zumindest eines aus einem Käufernamen, einer Adresse, einer Telefonnummer und einer Zahlungsinformation umfasst.

7. Verfahren nach einem der Ansprüche 1 bis 6, bei dem die Verschlüsselung unter Verwendung des Blowfish-Algorithmus durchgeführt wird.

8. Verfahren nach einem der Ansprüche 1 bis 7, bei dem die elektronischen Daten in einem verschlüsselten Format auf das eine Zielmedienexemplar (28) geschrieben werden, wobei der einzigartige Bezeichner als Entschlüsselungsschlüssel verwendet wird.

9. Verfahren nach einem der Ansprüche 1 bis 8, bei dem das Aufbauen einer Verbindung zwischen der Clientvorrichtung (20, 22) und dem Server (16) über die Netzwerkinfrastruktur (12) umfasst:
Schicken eines Formulars von der Clientvorrichtung (20, 22) an den Server (16),
Ausführen eines Programms zum Bearbeiten des Formulars an dem Server (16), und
Schicken eines Metatags und einer Transaktionsdatei an die Clientvorrichtung (20, 22).

10. Verfahren nach Anspruch 9, bei dem das Metatag und die Transaktionsdatei in der Clientvorrichtung (20, 22) ein Clientprogramm aufrufen, nachdem sie zu der Clientvorrichtung (20, 22) gesendet wurden.

11. Verfahren nach Anspruch 10, bei dem das Clientprogramm die Transaktionsdatei öffnet und Metadaten von Metatags in der Transaktionsdatei syntaktisch analysiert.

12. Verfahren nach Anspruch 11, bei dem das Clientprogramm eine Verbindung zu einer Serveradresse herstellt, die von einem vorbestimmten Metatag in der Transaktionsdatei identifiziert wird, um die elektronischen Daten zu empfangen.

13. Verfahren nach Anspruch 12, bei dem die Serveradresse dynamisch verändert wird, wenn die elektronischen Daten von dem Server angefordert werden.

14. System zum Verteilen von elektronischen Daten über eine Netzwerkinfrastruktur (12) mit
zumindest einer Clientvorrichtung (20, 22) zum Betrieb durch einen Benutzer, der elektronische Daten zu empfangen wünscht,
zumindest einem Server (16), wobei der zumindest eine Server (16) die elektronischen Daten enthält und die elektronischen Daten anbietet zum Herunterladen an die zumindest eine Clientvorrichtung (20, 22) über die Netzwerkinfrastruktur (12);
wobei die zumindest eine Clientvorrichtung (20, 22) so angepasst ist, dass sie dem zumindest einen Server (16) einen einzigartigen Bezeichner übermittelt, wobei der einzigartige Bezeichner einem bestimmten Medienexemplar (28) zugeordnet ist, auf dem die elektronischen Daten gespeichert werden sollen,
der zumindest eine Server (16) so angepasst ist, dass er die elektronischen Daten unter Verwendung des einzigartigen Bezeichners als Schlüssel verschlüsselt und die verschlüsselten elektronischen Daten an die zumindest eine Clientvorrichtung (20, 22) herunterlädt, und
die zumindest eine Clientvorrichtung (20, 22) so angepasst ist, dass sie die verschlüsselten elektronischen Daten auf das bestimmte Medienexemplar (28) schreibt, so dass auf die verschlüsselten elektronischen Daten nur von dem bestimmten Medienexemplar (28) zugegriffen werden kann.

15. System nach Anspruch 14, bei dem die zumindest eine Clientvorrichtung (20, 22) weiter so angepasst ist, dass sie ein Formular an den zumindest einen Server (16) schickt, wobei das Formular von dem zumindest einen Server (16) bearbeitet wird und der Server (16) so angepasst ist, dass er ein Metatag und eine Transaktionsdatei an die Clientvorrichtung (20, 22) übermittelt.

16. System nach Anspruch 15, bei dem das Metatag und die Transaktionsdatei so angepasst sind, dass sie in der zumindest nachdem sie zu der zumindest einen Clientvorrichtung (20, 22) übermittelt wurden.

17. System nach Anspruch 16, bei dem das Clientprogramm so angepasst ist, dass es die Transaktionsdatei öffnet und Metadaten von Metatags in der Transaktionsdatei syntaktisch analysiert.

18. Verfahren nach Anspruch 17, bei dem das zumindest eine Clientprogramm so angepasst ist, dass es eine Verbindung zu einer Serveradresse herstellt, die von einem vorbestimmten Metatag in der Transaktionsdatei identifiziert wird, um die elektronischen Daten zu empfangen.

19. Verfahren nach Anspruch 18, bei dem die Serveradresse vondem zumindest einen Server dynamisch verändert wird, wenn die elektronischen Daten von dem zumindest einen Server angefordert werden.

## Revendications

1. Un procédé de distribution électronique de données électroniques depuis un serveur (16) à un dispositif client (20, 22) via une infrastructure de réseau (12), ledit procédé utilisant un identificateur unique, formé d'un seul élément de support (28), afin d'associer lesdites données électroniques seulement audit élément de support (28), ledit procédé comprenant :
l'établissement d'une connexion (200) entre le dispositif client (20, 22) et le serveur (16), via l'infrastructure de réseau (12) ;
la transmission (304), via l'infrastructure de réseau (12), dudit identificateur unique dudit un élément de média destinataire (28) au serveur (16) ;
le cryptage (308), au serveur (16), desdites données électroniques à communiquer au dispositif client (20, 22) ;
la communication, via l'infrastructure de réseau (12), desdites données électroniques au dispositif client (20, 22), dans lequel lesdites données électroniques se trouvent sous un format crypté ; et
l'écriture (310), au dispositif client (20, 22), desdites données électroniques audit élément de média (28), de manière que lesdites informations puissent faire l'objet d'accès en vue d'utilisation, de la part uniquement dudit élément de média destinataire (28),
dans lequel ledit cryptage (308) desdites données électroniques à transmettre au dispositif client (20, 22) comprend le cryptage d'au moins l'une desdites données électroniques et d'une clé de cryptage auxdites données électroniques, ledit cryptage utilisant ledit identificateur unique comme clé de cryptage.

2. Procédé selon la revendication 1, dans lequel ladite transmission (304) dudit identificateur unique au serveur (16) comprend :
l'accès audit un élément de média destinataire (28) ;
la lecture (322) dudit identificateur unique depuis un emplacement prédéterminé sur ledit un élément de média destinataire (28) ; et
le formatage dudit identificateur unique en une première structure de données, afin d'établir une communication avec le dispositif client (20, 22).

3. Procédé selon la revendication 1, dans lequel ledit emplacement prédéterminé sur ledit élément de média destinataire (28) est une piste prédéterminée.

4. Procédé selon l'une quelconque des revendications 1 à 3, comprenant en outre la communication d'une information additionnelle au serveur distant (16).

5. Procédé selon la revendication 4, dans lequel ladite information additionnelle comprend au moins l'un parmi l'identification, l'adresse, le numéro de téléphone et l'information de paiement concernant le client.

6. Procédé selon l'une quelconque des revendications 1 à 5, comprenant en outre :
la communication d'une information additionnelle au serveur distant (16) ; et
le cryptage d'une information additionnelle, conjointement avec lesdites données électroniques, ladite information additionnelle comprenant au moins l'un parmi le nom, l'adresse, le numéro de téléphone et l'information de paiement du client.

7. Procédé selon l'une des revendications 1 à 6, dans lequel ledit cryptage est effectué en utilisant l'algorithme de Blowfish.

8. Procédé selon l'une des revendications 1 à 7, dans lequel lesdites données électroniques sont écrites sur ledit élément de média destinataire (28) sous un format crypté, en utilisant ledit identificateur unique en tant que clé de décryptage.

9. Procédé selon l'une quelconque des revendications 1 à 8, dans lequel ledit établissement d'une connexion (200), entre le dispositif client (20, 22) et le serveur (16), via l'infrastructure de réseau (12), comprend :
la soumission, depuis le dispositif client (20, 22), d'un formulaire au serveur (16) ;
l'exécution, au niveau du serveur (16), d'un programme servant à traiter ledit formulaire ; et
l'envoi, au dispositif client (20, 22), d'une méta-balise (tag) et d'un fichier de transaction.

10. Procédé selon la revendication 9, dans lequel ladite méta-balise et ledit fichier de transaction lancent un programme client au dispositif client (20, 22), après avoir été envoyé au dispositif client (20, 22).

11. Procédé selon la revendication 10, dans lequel ledit programme client ouvre ledit fichier de transaction et analyse les méta-données à partir des méta-balises se trouvant dans ledit fichier de transaction.

12. Procédé selon la revendication 11, dans lequel le programme client relie à une adresse de serveur, identifiée par une méta-balise prédéterminée dans ledit fichier de transaction, afin de recevoir lesdites données électroniques.

13. Procédé selon la revendication 12, dans lequel ladite adresse de serveur est modifiée dynamiquement lorsque lesdites données électroniques sont demandées depuis le serveur.

14. Système de distribution de données électroniques sur une infrastructure de réseau (12), comprenant :
au moins un dispositif client (20, 22) pour un fonctionnement sous les commandes d'un opérateur souhaitant recevoir lesdites données électroniques ; et
au moins un serveur (16), ledit au moins un serveur (16) contenant lesdites données électroniques et offrant lesdites données électroniques pour un déchargement audit au moins un dispositif client (20, 22), via ladite infrastructure de réseau (12),
dans lequel au moins un dispositif client (20, 22) est adapté pour communiquer un identificateur unique audit au moins un serveur (16), ledit identificateur unique étant associé à un élément particulier de média (28) auquel lesdites données électroniques doivent être stockées,
dans lequel ledit au moins un serveur (16) est adapté pour crypter lesdites données électroniques en utilisant ledit identificateur unique comme clé et pour décharger les données électroniques ayant été cryptées audit au moins un dispositif client (20, 22), et
dans lequel ledit au moins un dispositif client (20, 22) est adapté pour écrire les données électroniques cryptées audit élément particulier de média (28), de manière que les données électroniques cryptées puissent ne faire l'objet d'accès que depuis ledit élément particulier de média (28).

15. Système selon la revendication 14, dans lequel ledit au moins un dispositif client (20, 22) est, en outre, adapté pour soumettre un formulaire audit au moins un serveur (16), dans lequel ledit formulaire est traité par ledit au moins un serveur (16), et ledit serveur (16) est adapté pour communiquer une méta-balise et un fichier de transaction audit au moins un dispositif client (20, 22).

16. Système selon la revendication 15, dans lequel ladite méta-balise et le ledit fichier de transaction sont adaptés pour lancer un programme client audit au moins un dispositif client (20, 22), après avoir été communiqué audit au moins un dispositif client (20, 22).

17. Système selon la revendication 16, dans lequel ledit programme client est adapté pour ouvrir ledit fichier de transaction et pour analyser les méta-données, à partir des méta-balises se trouvant dans ledit fichier de transaction.

18. Système selon la revendication 17, dans lequel ledit au moins un programme client est adapté pour connecter à une adresse de serveur, identifiée par une méta-balise prédéterminée dans ledit fichier de transaction, afin de recevoir lesdites données électroniques.

19. Système selon la revendication 18, dans lequel ladite adresse de serveur est modifiée dynamiquement par ledit au moins un serveur, lorsque lesdites données électroniques sont requises de la part dudit au moins un serveur.
